(19) Europäisches Patentamt
European Patent Office
Office européen des brevets

(11) **EP 1 772 717 B1**

(12) **EUROPEAN PATENT SPECIFICATION**

(45) Date of publication and mention
of the grant of the patent:
**11.05.2011 Bulletin 2011/19**

(51) Int Cl.:
***G01L 21/10*** *(2006.01)*    ***G01N 27/12*** *(2006.01)*

(21) Application number: **05021604.3**

(22) Date of filing: **04.10.2005**

(54) **Pressure or gas sensor and sensing method using nano-cavities**

Drucksensor oder Gassensor und Messmethode basiert auf Nanohohlräumen

Capteur de pression ou capteur de gaz et méthode de mesure utilisant des nanopores

(84) Designated Contracting States:
**DE**

(43) Date of publication of application:
**11.04.2007 Bulletin 2007/15**

(73) Proprietor: **Sensirion Holding AG**
**8712 Stäfa (CH)**

(72) Inventors:
• **Mayer, Felix**
**8712 Stäfa (CH)**
• **Streiff, Matthias**
**8006 Zürich (CH)**
• **Bühler, Johannes**
**8610 Uster (CH)**

(74) Representative: **Sutter, Kurt et al**
**E. Blum & Co. AG**
**Vorderberg 11**
**8044 Zürich (CH)**

(56) References cited:
US-A- 5 557 972        US-A1- 2002 132 101
US-A1- 2004 195 096    US-B1- 6 533 554

EP 1 772 717 B1

**Description**

The invention relates to a pressure or gas sensor and a sensing method based on measuring the heat transfer through a thermal conductor.

Conventional thermal pressure sensors are, for example, Pirani sensors, which comprise a "thermal conductor" formed by a cavity filled with a gas to be measured. A temperature gradient is created in the thermal conductor, typically by placing a heat source therein. The heat flow generated by the temperature gradient is a measure of the thermal conductivity, which in turn depends on the pressure of the gas. This type of sensors has a high sensitivity if the free path length $\lambda$ of the gas molecules is in the order of or larger than the length L of the cavity, i.e. if the Knudsen number $K_n = \lambda/L$ is around 1 or larger than 1.

For conventional sensors, the Knudsen number is much smaller than 1 for pressures in the order of 1 bar, i.e. these sensors are suited for measurements at much lower pressures only.

US 2004/0195096 describes a composition sensor having a membrane supported by a porous silicon layer. The porous silicon layer serves to enhance the mechanical stability of the membrane 2 without contributing to thermal conductivity.

US 5 557 972 discloses a miniaturized silicon based thermally controlled vacuum sensor and a method for measuring vacuum pressure. It comprises a single cavity limited by a silicon substrate and a membrane manufactured by processes such as etching, a heat source and a microprocessor used to control and measure the power required to maintain a predetermined temperature differential between a sensing resistive element on the membrane and an ambient temperature sensing element of the sensor base. The height of the cavity lies in the order of magnitude of 10 or 100 micrometers.

The problem to be solved by the present invention is to provide a sensor and method of the type mentioned above that allows a measurement at higher pressure ranges.

This problem is solved by the sensor and method of the independent claims.

Accordingly, the thermal conductor comprises a solid matrix forming a plurality of cavities. The average extension of the cavities along the temperature gradient (i.e. in the direction from hot to cold) is less than 100 nm. This is based on the understanding that the free path length $\lambda$ at pressures in the order of 1 bar is around 100 nm (or somewhat lower), such that the cavities have a Knudsen number in the order of 1 or somewhat below 1. Hence, the cavities show a strong temperature dependence of the thermal conductivity around 1 bar, which makes the sensor suited for measurements in this pressure regime. To carry out a measurement, a temperature gradient is generated in the matrix for inducing a heat flux in the thermal conductor. A parameter depending on the heat flux is measured and used to derive the pressure if the sensor is used as a pressure sensor for a gas of known composition.

The thermal conductivity of the nanoporous material also depends on the gas composition and, therefore, if the pressure of the gas is known, the same type of sensor is able to determine the composition of the gas. Hence, the invention also applies to a sensor and method for measuring the composition of a gas.

Further advantageous embodiments of the invention are disclosed in the dependent claims as well as in the following description of specific embodiments. The description makes reference to the figures, which show:

Fig. 1 is a top view of a sensor according to the present invention,
Fig. 2 is a sectional view along line II-II of Fig. 1,
Fig. 3 is a sectional view through a second embodiment of the invention,
Fig. 4 is a top view of a third embodiment of the invention,
Fig. 5 shows the derivative d$\kappa$(p)/dp as a function of pore size, and
Fig. 6 shows a sectional view of a fourth embodiment of the invention.

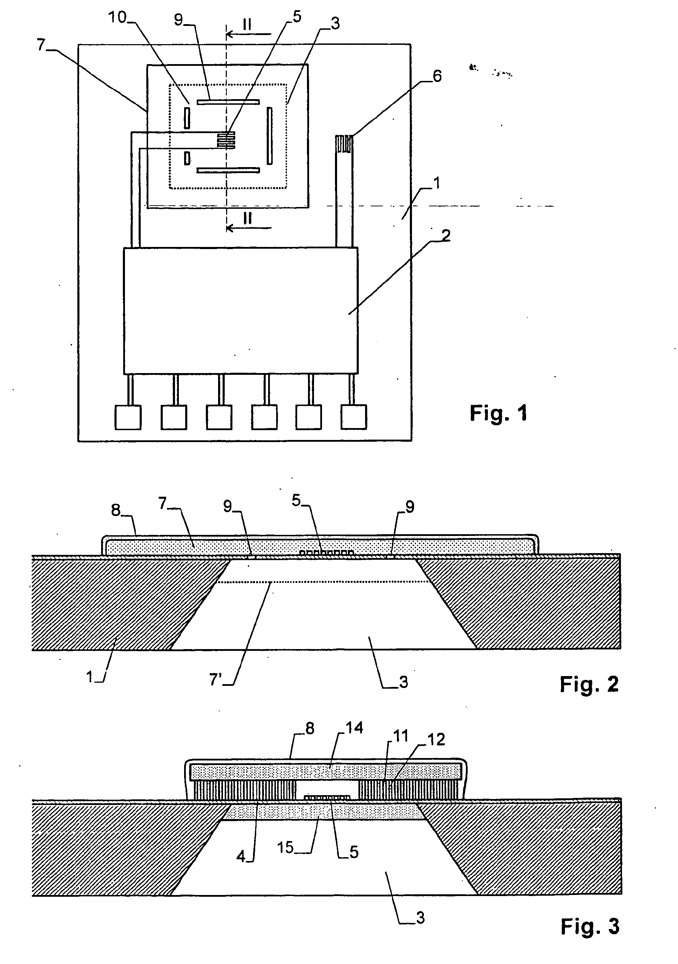

The sensor shown in Figs. 1 and 2 comprises a substrate 1, which is advantageously a semiconductor substrate, such as a silicon substrate, with circuitry 2 integrated thereon. A recess or opening 3 has been formed by anisotropic etching. A membrane 4 of substrate 1 spans recess or opening 3 and is e.g. made of silicon oxide and/or silicon nitride. Methods for forming opening 3 and membrane 4 are known to the person skilled in the art.

A resistive heater 5 is arranged approximately at the center of membrane 4 and forms a heat source when a current is caused to flow through it. A reference temperature sensor 6 is arranged on substrate 1 at a distance from the location of membrane 4.

A layer-shaped thermal conductor 7 covers heater 5 and, in the present embodiment, all of membrane 4 and part of the surrounding bulk of substrate 1. The term "thermal conductor" does not imply that the layer has to show high thermal conductivity, but rather that its thermal conductivity is the parameter that changes under varying pressure or gas composition as discussed below.

Thermal conductor 7 can optionally be covered by a protective layer 8. Advantageously, protective layer 8 is a thin polymer layer. This layer acts as a humidity barrier and reduces the amount of humidity entering thermal layer 7 and/or it can be used for mechanically reinforcing thermal conductor 7.

In operation, circuitry 2 feeds a current through heater 5 for generating a source of heat inside or below thermal conductor 7. It also measures the temperature at the location of heater 5, e.g. by measuring the electrical resistance of heater 5. At the same time, it also measures the temperature at the location of temperature sensor 6.

Since, as described in detail below, the thermal conductance of thermal conductor 7 is a function of the pressure and composition of the surrounding gas, the heat flow through thermal conductor 7 will be a function of the pressure and composition as well. Hence, the heat flow and therefore the pressure or composition can e.g. be determined from the temperature of heater 5 at a given heating current or from the heating current required to maintain a given temperature in heater 5. This result can be corrected for the gas temperature and substrate temperature using the temperature measured by temperature sensor 6.

The actual value of the pressure or composition can e.g. be calculated from experimentally obtained calibration data stored in circuitry 2 or in an external system. This calibration data tabulates the pressure or composition (for a known composition or pressure, respectively) as a function of the measured voltage or current over/through heater 5 and the temperature at temperature sensor 6.

Instead of measuring the voltage or current over/through heater 5, any other parameter depending on the heat flux from heater 5 can be measured as well.

In order to allow measurements at pressures in the order of 1 bar (or higher), the design of thermal conductor 7 is of importance. In general, and as mentioned above, thermal conductor 7 should comprise a solid matrix forming a plurality of cavities, wherein the average extension L of these cavities along the temperature gradient is less than 100 nm.

The pressure in the cavities should depend in predictable manner on the pressure of the gas. Advantageously, the pressure in the cavities should be equal to the pressure in the gas.

This type of cavities has a thermal conductance $\kappa$ that can be expressed, at least in approximation, as

$$\kappa(p) = \kappa_O/(1 + 2\beta \cdot K_n) \qquad (1)$$

where $\kappa_O$ is the thermal conductance in the viscous regime of the gas (i.e. in a situation where the Knudsen number $K_n$ is much smaller than 1) and $\beta$ is a parameter depending on the temperature and composition of the gas, see S.Q. Zeng, A. Hunt and R. Greif, Transport properties of gas in silica aerogel, Journal of Non-Crystalline Solids 186 (1995) 264 - 270. Knudsen number $K_n$ or, more accurately, the free path length $\lambda$, depends on the pressure p of the gas and equation (1) can be rewritten as

$$\kappa(p) = \kappa_O/(1 + p_{12}/p), \qquad (2)$$

The transition pressure $p_{12}$ is a parameter depending on the geometry (primarily the extension L) of the cavities, the temperature, and the composition of the gas. The transition pressure $p_{12}$ increases if the extension L becomes small.

Equations (1) and (2) also express the thermal conductance of the whole thermal conductor 7 with a plurality of cavities arranged behind each other in the temperature gradient if the thermal conductance of the matrix material is much higher than the thermal conductance of the individual cavities.

When used as a pressure sensor, the sensitivity of the sensor is high if the derivative of the thermal conductance $\kappa(p)$ in respect to pressure p, i.e. $d\kappa(p)/dp$, is high. As can be seen easily, this derivative goes to zero for $p \gg p_{12}$. In order to have a good sensitivity at normal atmospheric pressures, $p_{12}$ should therefore be sufficiently close to 1 bar or, equivalently, the Knudsen number $K_n$ should not be much smaller than 1. This requires the extension L of the cavities to be sufficiently small.

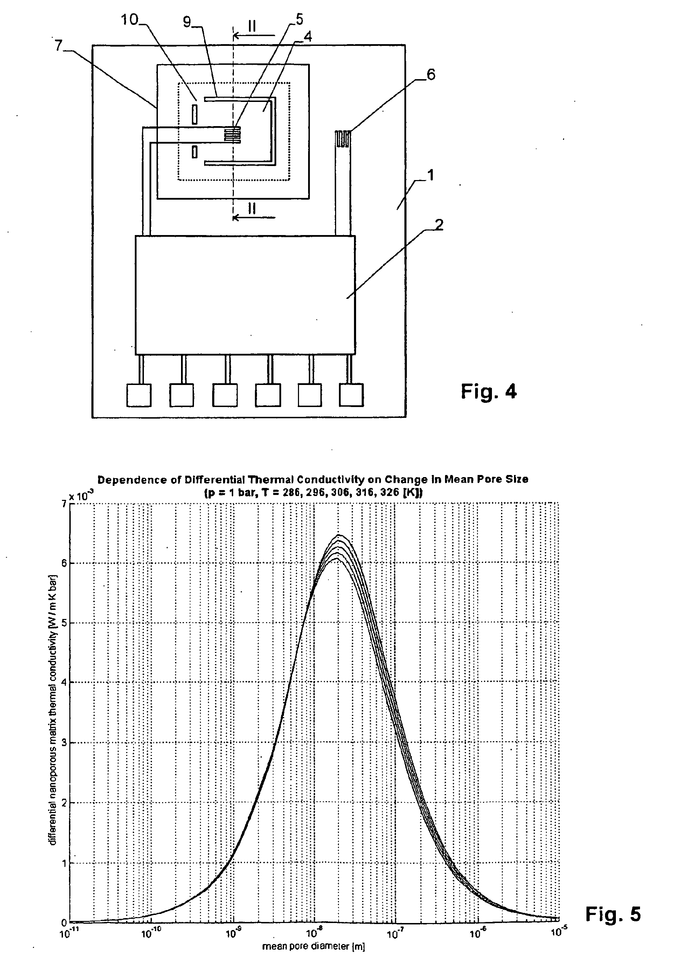

Fig. 5 shows the value of the derivative $d\kappa(p)/dp$ as a function of pore size for silica aerogel at five different temperatures. The graph was obtained by calculating the derivative of Eq. (32) of the paper of S.Q. Zeng et al. (see above) using a porosity $\Pi = 0.94$ and a nanoporous matrix density of 110 kg/m3.

As can be seen, the derivative $d\kappa(p)/dp$ becomes small (< 50% of maximum) for a pore size above 100 nm or below 4 nm and has a maximum around 20 nm.

Equations (1) and (2) are not limited to silica aerogels but hold true, in approximation, for any other systems having a matrix forming a plurality of cavities as long as the thermal conductance of the matrix material is much higher the thermal conductance of the individual cavities. The pore size parameter L basically expresses the average extension of the cavities along the temperature gradient, i.e. along the direction of heat flow.

In operation, the heat from heater 5 is carried off, at least partially, through thermal conductor 7. If the device is operated in a range where the derivative dκ(p)/dp is large, a change of pressure can be measured easily and accurately.

In the embodiment of Fig. 2, only the top side of membrane 4 and heater 5 is covered by thermal conductor 7. To further improve the device's accuracy and reliability, thermal conductor 7 can comprise an additional layer 7' applied to the bottom side of membrane 4, as shown in dashed lines in Fig. 2.

Also, in order to reduce a (non pressure-dependent) heat flow through membrane 4 itself, membrane 4 can be intersected by gaps 9, as indicated in Figs. 1 and 2. In the embodiment of Fig. 1, several gaps are arranged around heater 5 with small webs 10 between them for providing structural integrity for membrane 4. Other arrangements can be used as well. For example, membrane 3 can be tongue shaped and only be attached at one edge to substrate 1. This is shown schematically in Fig. 4, which shows a sensor that basically corresponds to the one of Fig. 1 but where the gaps 9 have been joined to be U-shaped and to extend along the border of the tongue-shaped membrane 4.

The device of Figs. 1 and 2 can e.g. be manufactured by first preparing substrate 1, circuitry 2, opening 3, membrane 4 and heater 5 using conventional processing techniques as known to the person skilled in the art. In a next step, thermal conductor 7 can be applied.

There are various methods to manufacture thermal conductor 7 with the required cavities:

- Flame spray pyrolysis: This technique is described for silica aerogels and similar materials in L. Mädler et al., Aerosol Science 33 (2002) 369-389, and in the references cited therein. In general, silica aerogels have been found to be an advantageous material to be used as a thermal conductor in the present invention.
- Various other chemical and physical methods as described in section 1 of T. Sahm et al., Sensors and Actuators B 98 (2004) 148-153, and in the references cited therein.
- Patterning techniques as described below.

After manufacturing thermal conductor 7, protective layer 8 can be applied. Protective layer 8 is advantageously a polymer layer. It can be applied using spin coating techniques, e.g. as described by C. R. M. Grovenor in "Microelectronic Materials", Institute of Physics Publishing, Bristol, 1989.

As mentioned, thermal conductor 7 can also be manufactured using patterning techniques. This is described in reference to the embodiment of the sensor shown in Fig. 3.

Thermal conductor 7 of the embodiment of Fig. 3 consists of a series of vertical walls 11 (corresponding to the "solid matrix" mentioned above) separated by vertical gaps 12 (corresponding to the "cavities"). The walls 11 are applied to the surface of membrane 4 and substrate 1. They surround heater 5 by extending around it. To prevent a heat transfer in vertical direction, porous, thermal insulator layers 14 and 15 are arranged on top of the walls 11 and gaps 12 as well as below membrane 15. These insulating layers 14, 15 may e.g. be silica aerogels as mentioned above, but need not necessarily have cavities with a size below 100 nm because they are not used for measuring purposes.

The walls 11 are arranged, when seen along the temperature gradient, behind each other. The extension of the gaps 12 in the direction along the temperature gradient is smaller than 100 nm for measurements of pressures in the order of 1 bar or for measuring gas compositions at a pressure in the order of 1 bar.

Thermal conductor 7 of the embodiment of Fig. 3 may, together with insulating layers 14, 15, again be protected by a protective layer 8 that is permeable for the gas to be measured but not for water.

The device of Fig. 3 can be manufactured in a similar manner as the first embodiment, with the exception of the formation of the walls 11. These walls are formed by nanolithographic patterning using one of the methods described in the following references:

- E-beam lithography, described in e.g. C. David, T. Weitkamp, B. Nöhammer, J.F. van der Veen, Diffractive and refractive X-ray optics for microanalysis applications, Spectrochimica Acta B59, 1505 (2004).
- Nano imprint lithography, described in e.g. R.W. Jaszewski, H. Schift, J. Gobrecht and P. Smith, Hot embossing in polymers as a direct way to pattern resist, Microelectronic Engineering 41/42, 575-8, 1998.
- X-ray interference lithography, described in e.g. H. H. Solak, D. He, W. Li, F. Cerrina, B. H. Sohn, X. M. Yang, P. Nealey, Exposure of 38nm grating patterns with extreme ultraviolet lithography, Appl. Phys. Lett. 75 (1999) 2328.

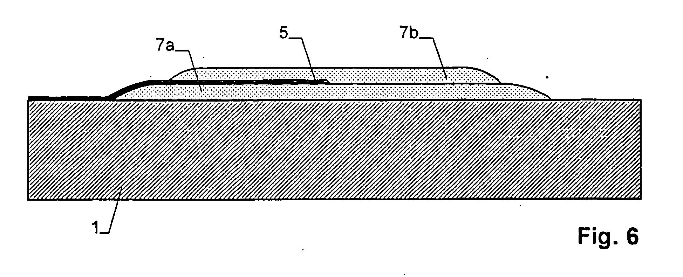

A further embodiment of the invention is shown in Fig. 6. In this embodiment, a first layer 7a of the thermal conductor is applied to substrate 1, then heater 5 is applied as a metal conductor on the top of first layer 7a using microlithographic methods. Then a second layer 7b is applied over heater 5. Thus, heater 5 is embedded between two layers of the thermal conductor, i.e. it is substantially surrounded by the thermal conductor. Hence, all heat form heat source 5 has to flow through one of these layers, which increases the device's sensitivity. The embodiment of Fig. 6 does not require a substrate with a membrane 4 - rather, heater 5 and the two layers 7a, 7b can be directly applied over the bulk of the substrate.

To keep noxious humidity out of thermal conductor 7, the gas can e.g. also be dried using known humidity absorbing techniques, or the matrix of the thermal conductor 7 can be heated above the dew temperature of the gas that the matrix is in contact with.

In the examples above, thermal conductor 7 was either a nonoporous material or an etched structure of vertical walls. Alternatively, thermal conductor 7 may e.g. also comprise horizontal and/or vertical structures with small cavities manufactured by sacrifical layer techniques.

## Claims

**1.** A pressure or gas composition sensor comprising
a thermal conductor (7) and
a heat source (5) for generating a temperature gradient in said thermal conductor (7),
**characterized in that** said thermal conductor (7) comprises a solid matrix forming a plurality of cavities arranged to be filled with a gas to be measured, wherein an average extension of said cavities along said gradient is between 4 nm and 100 nm, wherein said heat source (5) is adapted to generate a heat flux in said matrix and wherein said sensor is adapted to measure a parameter depending on said heat flux and to derive said pressure or composition from said parameter.

**2.** The sensor of claim 1 wherein, seen along said gradient, said matrix forms a plurality of cavities behind each other.

**3.** The sensor of any of the preceding claims further comprising a substrate (1), wherein said heat source (5) is arranged on or in said substrate (1) and said thermal conductor (7) is arranged as a layer on said substrate (1) and said heat source (5).

**4.** The sensor of claim 3 wherein said substrate (1) has a recess or opening (3) and comprises a membrane (5) extending over said recess or opening (3), wherein said heat source (5) is arranged on or in said membrane (4).

**5.** The sensor of claim 4 wherein said membrane (4) comprises gaps (9) for reducing a heat flow through said membrane (4).

**6.** The sensor of any of the preceding claims wherein said solid matrix comprises a porous silica gel.

**7.** The sensor of any of the preceding claims further comprising a substrate (1) wherein said thermal conductor (7) comprises a plurality of walls (11) arranged, seen along said gradient, behind each other, wherein a plurality of said cavities are formed by gaps (12) between said walls.

**8.** The sensor of any of the preceding claims wherein said heat source is surrounded by said thermal conductor (7) and, in particular, embedded between a first and a second layer (7a, 7b) of said thermal conductor.

**9.** A method for determining a pressure or composition of a gas comprising the steps of
placing a solid matrix in pressure communication with said gas, wherein said solid matrix forms a plurality of cavities, generating a heat flux in said matrix and measuring a parameter depending on said heat flux, and
deriving said pressure or composition from said parameter,
wherein an average extension of said cavities along a direction of said heat flux is between 4 nm and 100 nm.

**10.** The method of claim 9 wherein said matrix is brought into contact with said gas and is heated to a temperature above a dew temperature of said gas.

**11.** The method of any of the claims 9 or 10 comprising the step of deriving the pressure from said parameter.

## Patentansprüche

**1.** Druck oder Gasbeschaffenheitssensor, enthaltend
einen Wärmeleiter (7) und
eine Wärmequelle (5) zum Erzeugen eines Temperaturgradienten in dem Wärmeleiter (7),
**dadurch gekennzeichnet, dass** der Wärmeleiter (7) eine Festkörpermatrix enthält, die eine Vielzahl von Kavitäten bildet, welche eingerichtet sind um mit einem zu messenden Gas befüllt zu werden, wobei eine mittlere Ausdehnung der Kavitäten entlang des Gradienten zwischen 4 nm und 100 nm beträgt, wobei die Wärmequelle (5) ausgebildet ist zum Erzeugen eines Wärmeflusses in der Matrix und wobei der Sensor ausgebildet ist zum Messen eines von dem Wärmefluss abhängigen Parameters und zum Ableiten des Drucks oder der Beschaffenheit von diesem Parameter.

2. Sensor nach Anspruch 1, bei dem die Matrix eine Vielzahl von Kavitäten hintereinander in Richtung des Gradienten gesehen bildet.

3. Sensor nach einem der vorhergehenden Ansprüche, weiter enthaltend ein Substrat (1), wobei die Wärmequelle (5) an oder in dem Substrat (1) angeordnet ist und der Wärmeleiter (7) als eine Schicht über dem Substrat (1) und der Wärmequelle (5) angeordnet ist.

4. Sensor nach Anspruch 3, bei dem das Substrat (1) eine Vertiefung oder eine Aussparung (3) aufweist und eine Membran (5) aufweist, die sich über die Vertiefung oder Aussparung (3) erstreckt, wobei die Wärmequelle (5) an oder in der Membran (4) angeordnet ist.

5. Sensor nach Anspruch 4, bei dem die Membran (4) Aussparungen (9) enthält zum Verringern des Wärmeflusses durch die Membran (4).

6. Sensor nach einem der vorhergehenden Ansprüche, bei dem die Festkörpermatrix ein poröses Silikagel enthält.

7. Sensor nach einem der vorhergehenden Ansprüche, ferner enthaltend ein Substrat (1), wobei der Wärmeleiter (7) eine Vielzahl von in Richtung des Gradienten gesehen hintereinander angeordneten Wänden (11) aufweist, wobei eine Vielzahl der Kavitäten gebildet werden durch Leerstellen (12) zwischen den Wänden.

8. Sensor nach einem der vorhergehenden Ansprüche, bei dem die Wärmequelle umgeben ist von dem Wärmeleiter (7), und insbesondere eingebettet ist zwischen einer ersten und zweiten Schicht (7a, 7b) des Wärmeleiters.

9. Verfahren zum Bestimmen eines Druckes oder einer Beschaffenheit eines Gases, enthaltend die Schritte
Anordnen einer Festkörpermatrix in Druckaustausch mit dem Gas, wobei die Festkörpermatrix eine Vielzahl von Kavitäten bildet,
Erzeugen eines Wärmeflusses in der Matrix und Messen eines von dem Wärmefluss abhängenden Parameters, und Ableiten des Drucks oder der Beschaffenheit von diesem Parameter,
wobei eine mittlere Ausdehnung der Kavitäten entlang einer Ausrichtung des Wärmeflusses zwischen 4 nm und 100 nm beträgt.

10. Verfahren nach Anspruch 9, bei dem die Matrix in Kontakt mit dem Gas gebracht wird und auf eine Temperatur über der Taupunkttemperatur des Gases erwärmt wird.

11. Verfahren nach einem der Ansprüche 9 oder 10, enthaltend den Schritt des Ableitens des Drucks von dem Parameter.

**Revendications**

1. Capteur de pression ou de composition gazeuse, comprenant
un conducteur thermique (7) et
une source de chaleur (5) pour engendrer un gradient de température dans ledit conducteur thermique (7),
**caractérisé par le fait que** ledit conducteur thermique (7) comprend une matrice solide formant une pluralité de cavités agencées pour être emplies d'un gaz devant être mesuré, une étendue moyenne desdites cavités étant comprise entre 4 nm et 100 nm le long dudit gradient, ladite source de chaleur (5) étant conçue pour générer un flux thermique dans ladite matrice, et ledit capteur étant conçu pour mesurer un paramètre en fonction dudit flux thermique et pour dériver ladite pression ou composition, sur la base dudit paramètre.

2. Capteur selon la revendication 1, dans lequel ladite matrice forme une pluralité de cavités situées les unes derrière les autres en observant le long dudit gradient.

3. Capteur selon l'une quelconque des revendications précédentes, muni par ailleurs d'un substrat (1), ladite source de chaleur (5) étant disposée sur ou dans ledit substrat (1), et ledit conducteur thermique (7) revêtant la forme d'une couche sur ledit substrat (1) et sur ladite source de chaleur (5).

**4.** Capteur selon la revendication 3, dans lequel ledit substrat (1) comporte un évidement ou un orifice (3), et offre une membrane (4) couvrant ledit évidement ou orifice (3), ladite source de chaleur (5) étant disposée sur ou dans ladite membrane (4).

**5.** Capteur selon la revendication 4, dans lequel ladite membrane (4) présente des fentes (9), afin de réduire une circulation de chaleur à travers ladite membrane (4).

**6.** Capteur selon l'une quelconque des revendications précédentes, dans lequel ladite matrice solide comprend un gel de silice poreux.

**7.** Capteur selon l'une quelconque des revendications précédentes, muni par ailleurs d'un substrat (1), ledit conducteur thermique (7) comprenant une pluralité de parois (11) disposées les unes derrière les autres en observant le long dudit gradient, une pluralité desdites cavités étant formée par des espaces interstitiels (12) entre lesdites paroi s.

**8.** Capteur selon l'une quelconque des revendications précédentes, dans lequel ladite source de chaleur est entourée par ledit conducteur thermique (7) et est, en particulier, noyée entre des première et seconde couches (7a, 7b) dudit conducteur thermique (7).

**9.** Procédé pour déterminer une pression ou la composition d'un gaz, comprenant les étapes consistant à
mettre une matrice solide en communication de pression avec ledit gaz, ladite matrice solide formant une pluralité de cavités,
générer un flux thermique dans ladite matrice, et mesurer un paramètre en fonction dudit flux thermique, et
dériver ladite pression ou composition, sur la base dudit paramètre,
une étendue moyenne desdites cavités étant comprise entre 4 nm et 100 nm le long d'une direction dudit flux thermique.

**10.** Procédé selon la revendication 9, dans lequel ladite matrice est mise en contact avec ledit gaz, et est chauffée jusqu'à une température excédant une température de condensation dudit gaz.

**11.** Procédé selon l'une quelconque des revendications 9 ou 10, comprenant l'étape de dérivation de la pression sur la base dudit paramètre.

Fig. 1

Fig. 2

Fig. 3

**Fig. 4**

Dependence of Differential Thermal Conductivity on Change in Mean Pore Size
(p = 1 bar, T = 286, 296, 306, 316, 326 [K])

**Fig. 5**

Fig. 6

# EP 1 772 717 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040195096 A
- US 5557972 A

### Non-patent literature cited in the description

- **S.Q. ZENG ; A. HUNT ; R. GREIF.** Transport properties of gas in silica aerogel. *Journal of Non-Crystalline Solids,* 1995, vol. 186, 264-270
- **L. MÄDLER et al.** *Aerosol Science,* 2002, vol. 33, 369-389
- **T. SAHM et al.** *Sensors and Actuators B,* 2004, vol. 98, 148-153
- **C. R. M. GROVENOR.** Microelectronic Materials. Institute of Physics Publishing, 1989
- **C. DAVID ; T. WEITKAMP ; B. NÖHAMMER ; J.F. VAN DER VEEN.** Diffractive and refractive X-ray optics for microanalysis applications. *Spectrochimica Acta,* 2004, vol. B59, 1505
- **R.W. JASZEWSKI ; H. SCHIFT ; J. GOBRECHT ; P. SMITH.** Hot embossing in polymers as a direct way to pattern resist. *Microelectronic Engineering,* 1998, vol. 41/42, 575-8
- **H. H. SOLAK ; D. HE ; W. LI ; F. CERRINA ; B. H. SOHN ; X. M. YANG ; P. NEALEY.** Exposure of 38nm grating patterns with extreme ultraviolet lithography. *Appl. Phys. Lett.,* 1999, vol. 75, 2328